# EUROPEAN PATENT APPLICATION

(11) **EP 2 075 485 A1**
(43) Date of publication of application: **01.07.2009**
(21) Application number: 07830112.4
(22) Date of filing: 18.10.2007
(51) Int. Cl.: F16G 5/18, F16G 13/06

(54) **POWER TRANSMISSION CHAIN AND POWER TRANSMISSION DEVICE WITH THE SAME**

(30) Priority: 20.10.2006 JP 2006286515
(71) Applicant: JTEKT Corporation, Osaka-shi Osaka 542-8502 (JP)
(72) Inventor: TADA, Seiji, Osaka-shi Osaka 5428502 (JP)
(74) Representative: Schaeberle, Steffen
(86) International application number: PCT/JP2007/070378
(87) International publication number: WO 2008/047877

(57) **Abstract**

[Problems to be Solved] To provide a power transmission chain which not only can prevent the occurrence of an edge contact phenomenon in which the edge portion of a pin end face is contacted with a pulley, but also can enhance the power transmission efficiency.

[Means for Solution] According the power transmission chain, in the end face 17 of a first pin 3 for connecting links to each other, there is provided a contact area 21. The contact area 21 is contacted with the pulley to transmit power. When viewed from the width direction of the chain, the contact area 21 has an egg-like shape which is relatively long in a longitudinal direction J and relatively short in a transverse direction K. The contact area 21 intersects with a first plane H1 to form a first intersection line L1. The contact area 21 intersects with a second plane H2 to form a second intersection line L2. The first intersection line L1 has a plurality of radiuses of curvature R1, R2.

## Description

### Technical Field

The present invention relates to a power transmission chain and a power transmission apparatus including such power transmission chain.

### Background Art

As an endless shaped power transmission chain used in a power transmission apparatus such as a pulley type continuously variable transmission (CVT) for a vehicle, for example, there is known a power transmission chain structured such that the links of the chain adjoining each other in the chain advancing direction are connected together using a pin and an inter-piece (for example, see the patent reference 1). In this type of power transmission chain, the two paired end faces of the pin are respectively engaged with their corresponding taper disks of a pulley to thereby transmit power.
Patent Reference 1: International Publication No. WO 2005/045280

### Disclosure of the Invention

### Problems that the Invention Solves

The end face of the pin is tapered as it goes from the middle portion of the pin in the chain diameter direction toward the outside end portion of the pin and thus the area of the outside end portion of the end face is small. As a result of this, when the end face is contacted with a tapered disk, there is a fear that there cannot be secured a sufficient contact area within the end face to cause an edge contact phenomenon in which even the edge of the end face can be contacted with the tapered disk. Occurrence of the edge contact phenomenon, unfavorably, facilitates the wear of the end face locally and also causes the end face to slip against the pulley to worsen the power transmission efficiency.

The invention aims at solving the above problems found in the conventional technology. Thus, it is an object of the invention to provide a power transmission chain and a power transmission apparatus which can prevent the occurrence of an edge contact phenomenon, that is, the contact of the edge portion of the end face of a pin with a pulley, and also can provide excellent power transmission efficiency.

### Means for Solving the Problems

In attaining the above object, according to the invention, there is provided a power transmission chain (1), comprising: a plurality of links (2) arranged in a chain advancing direction (X); and, a plurality of long connecting members (50) for connecting together the links (2) so as to be bent with respect to each other, wherein the connecting members (50) respectively include a power transmission member (3) having an end face (17) for forming therein a contact area (21; 21A; 21B; 21C; 21D; or, 21E) contactable with the sheave surfaces (62a, 63a; 72a, 73a) of pulleys (60, 70) in a power transmittable manner, the contact area (21; 21A; 21B; 21C; 21D; or, 21E) intersects with a first plane (H1) inclined at an angle of not less than 0° and not more than 20° with respect to a plane (H3) perpendicular to the chain advancing direction (X) to thereby form a first intersection line (L1; L1A; L1B; L1C; or, L1E) containing therein curved portions (L11, L12; L11A, L12A, L13A; L11B, L12B, L13B; or, L11C, L12C, L13C), the contact area (21; 21A; 21B; 21C; 21D; or, 21E) intersects with a second plane (H2) perpendicular to the first plane (H1) to thereby form a second intersection lines (L2; or, L2E) containing therein curved portions (L2; or, L2E), and at least one of the first and second intersection lines (L1, L2; L1A; L1B; L1C; L1E; L2; L2E) has a plurality of radiuses of curvature (R1, R2).

Here, the alphabetic characters put in the parentheses express corresponding composing elements and the like used in an embodiment which will be described later. This also applies similarly in the following description.
According to the invention, there are formed the intersection lines each having the radiuses of curvature, with the result that, in the contact area, there can be provided a portion having a small degree of curvature and a portion having a large degree of curvature. Owing to this, in the portion having a large degree of curvature, the contact area thereof with the pulleys can be reduced, and the relative sliding amount of the contact area with the pulleys can be decreased to reduce the slip loss thereof, hereby being able to enhance the power transmission efficiency. Also, in the portion having a small degree of curvature, it can be contacted with the pulleys in a sufficient contact area, thereby being able to reduce the surface pressure thereof with the pulleys. This can prevent the occurrence of an edge contact phenomenon in which the pulleys touch the contact area of the connecting member up to the edge of the end face of the connecting member.

In the invention, preferably, the radiuses of curvature (R1, R2) of the above-mentioned first intersection lines (L1; L1A; L1B; L1C) may contain a relatively large main radius of curvature relating to the contact areas (21; 21A; 21B; 21C; 21D), and the radius of curvature (R3) of the second intersection line (L2) may contain a relatively small main radius of curvature relating to the contact areas (21; 21A; 21B; 21C; 21D). In this case, when the contact area is viewed from the longitudinal direction of the connecting member, the length of the contact area in a direction parallel to a first plane can be set long, whereas the length thereof in a direction parallel to a second plane can be set small. Owing to this, while securing a sufficient area of the contact area, the power transmission member can be reduced in thickness in the chain advancing direction.

In the invention, preferably, the first intersection line (L1; L1A; L1B; L1C) may have the radiuses of curvature (R1, R2) and the second intersection line (L2) may have a single radius of curvature (R3). In this case, the first intersection line is allowed to contain a portion having a small radius of curvature. As a result of this, when the contact area is viewed from the longitudinal direction of the connecting member, the whole length of the contact area along the direction parallel to the first plane can be prevented from being excessively large. Owing to this, the contact area can be set short in the radial direction of the pulley, thereby being able to prevent more positively the pulley from touching the edge of the end face of the connecting member. Also, since the second intersection line is formed to have a single radius of curvature, the formation of the contact area can be facilitated.

In the invention, preferably, the contact area (21; 21A; 21B; 21C; 21D), when viewed from the longitudinal direction (W) of the connecting member (50), may have an egg-like shape relatively long in a direction (J) parallel to a first plane (H1). In this case, the contact area can be formed long and fine in a direction perpendicular to the chain advancing direction, with the result that the power transmission member can be formed thin in the chain advancing direction.

In the invention, preferably, there may be included: first and second pulleys (60, 70) respectively having a couple of mutually opposed conical-shaped sheave surfaces (62a, 63a; 72a, 73a); and, the above-mentioned power transmission chain (1) wound between and on these pulleys (60, 70) and engageable with the sheave surfaces (62a, 63a, 72a, 73a) for transmission of power. In this case, the wear of the end face of the power transmission member is reduced, with the result that there can be realized a power transmission apparatus which is excellent in durability and power transmission efficiency.

### Brief Description of the Drawings

Fig. 1 is a typical perspective view of the structure of the main portions of a chain type continuously variable transmission serving as a power transmission apparatus including a power transmission chain according to a first embodiment of the invention.
Fig. 2 is a partially enlarged section view of a drive pulley (a driven pulley) and a chain shown in Fig. 1.
Fig. 3 is a section view of the main portions of the chain.
Fig. 4 is a section view of the main portions taken along the IV-IV line shown in Fig. 3.
Fig. 5A is a view of the end face of a first pin when it is taken along the chain width direction. Fig. 5B is a section view taken along the VB-VB line shown in Fig. 5A. Fig. 5C is a section view taken along the VC-VC line shown in Fig. 5A.
Fig. 6 is a typical longitudinal section view of the schematic structure of a grinding apparatus.
Fig. 7 is a section view of a holder, taken along the VII-VII line shown in Fig. 6.
Fig. 8 is an enlarged view of the main portions of the holder shown in Fig. 6.
Fig. 9 is a section view of the main portions of a second embodiment according to the invention.
Fig. 10 is a section view of the main portions of a third embodiment according to the invention.
Fig. 11 is a section view of the main portions of a fourth embodiment according to the invention.
Fig. 12 is a view of a first pin used in a fifth embodiment according to the invention, when it is viewed in the chain width direction.
Fig. 13 is a view of a first pin used in a sixth embodiment according to the invention, when it is viewed in the chain width direction.

### Best Mode for Carrying out the Invention

Now, description will be given below of preferred embodiments according to the invention with reference to the accompanying drawings.

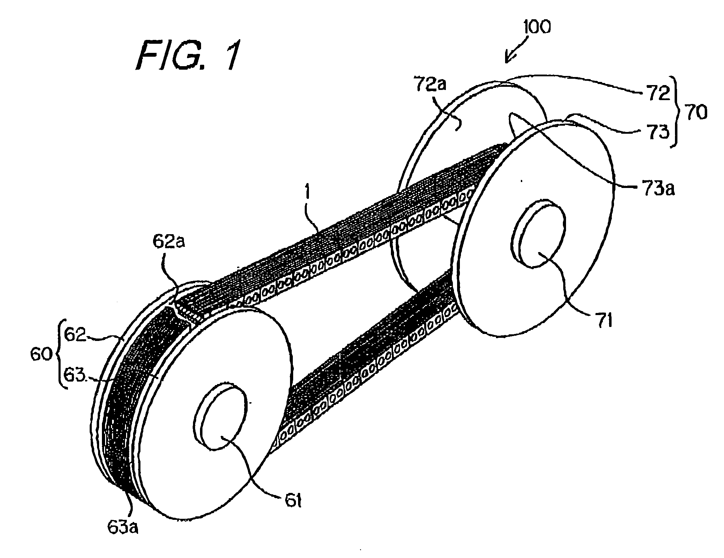

Fig. 1 is a typical perspective view of the structure of the main portions of a chain type continuously variable transmission (which is also hereinafter referred to as a continuously variable transmission simply) serving as a power transmission apparatus including a power transmission chain according to a first embodiment of the invention.
Referring to Fig. 1, a continuously variable transmission 100, which is carried on board in a vehicle such as an automobile, includes a drive pulley 60 made of metal (such as structural steel) serving as a first pulley, a driven pulley 70 made of metal (such as structural steel) serving as a second pulley, and an endless type power transmission chain (which is also hereinafter referred to as a chain simply) wound between and around the two pulleys 60 and 70. Here, as regards the chain 1, in Fig. 1, there is shown a section view of a portion thereof for the purpose of easy understanding.

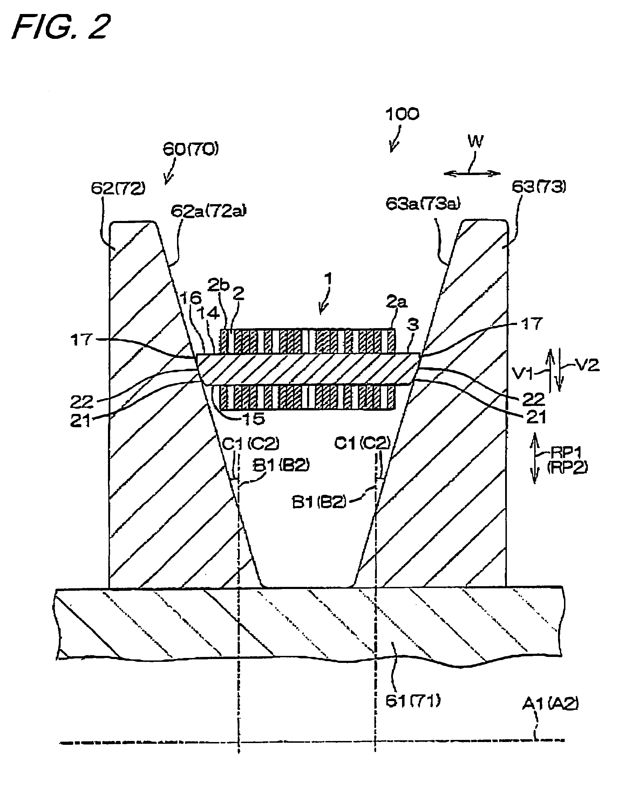

Fig. 2 is a partially enlarged section view of the drive pulley 60 (driven pulley 70) and chain 1 shown in Fig. 1. Referring to Figs. 1 and 2, the drive pulley 60 can be mounted integrally rotatably on an input shaft 61 connected to the drive source of a vehicle in such a manner that the power can be transmitted; and, the drive pulley 60 includes a fixed sheave 62 and a movable sheave 63. The fixed and movable sheaves 62 and 63 respectively include a pair of sheave surfaces 62a and 63 a which are disposed opposed to each other. The respective sheave surfaces 62a and 63a include a conical-shaped inclined surface.

The sheave surfaces 62a and 63a are respectively inclined with respect to a plane B1 perpendicular to the axial line A1 of the drive pulley 60. An angle (a pulley half angle C1) formed between the generating lines of the respective sheave surfaces 62a, 63a and the above-mentioned plane B1 is set, for example, at an angle of 11°. Between the sheave surfaces 62a and 63a, there is formed a groove; and, the chain 1 is sandwiched and held by the groove with strong pressure.
Also, to the movable sheave 63, there is connected an oil pressure actuator (not shown) in order to change the width of the groove; and, in gear shift, when the movable sheave 63 is moved in the axial direction (in Fig. 2, in the right and left direction) of the input shaft 61, the width of the groove can be changed. As the groove width is changed, the chain 1 is moved in the diameter direction (in Fig. 2, in the vertical direction) of the input shaft 61, thereby being able to change the effective radius of the drive pulley 60 relative to the chain 1.

On the other hand, the driven pulley 70, as shown in Figs. 1 and 2, is integrally rotatably mounted on an output shaft 71 connected to a drive wheel (not shown) in such a manner that power can be transmitted, Similarly to the drive pulley 60, the driven pulley 70 includes a fixed sheave 73 and a movable sheave 72 respectively having sheave surfaces 73a and 72a which are paired with each other and are disposed opposed to each other; and, the sheave surfaces 73a and 72a are used to form a groove between them, whereby the chain 1 can be sandwiched and held by the groove with strong pressure.
The respective sheave surfaces 73a and 72a are inclined with respect to a plane B2 perpendicular to the axial line A2 of the driven pulley 70; and, an angle (a pulley half angle C2) formed between the generating lines of the respective sheave surfaces 73a, 72a and the above plane B2 is set, for example, at an angle of 11°. The pulley half angle C1 of the drive pulley 60 is equal to the pulley half angle C2 of the driven pulley 70 (C1 = C2).

Similarly to the movable sheave 63 of the drive pulley 60, to the movable sheave 72 of the driven pulley 70, there is connected an oil pressure actuator (not shown); and, in gear shift, when the movable sheave 72 is moved, the width of the groove can be changed. As the groove width is changed, the chain 1 is moved, thereby being able to change the effective radius of the driven pulley 70 relative to the chain 1.

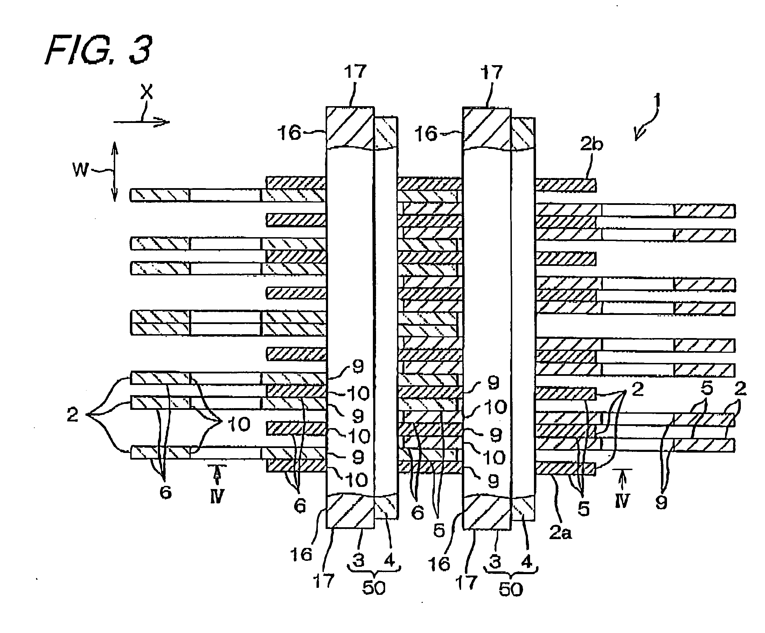

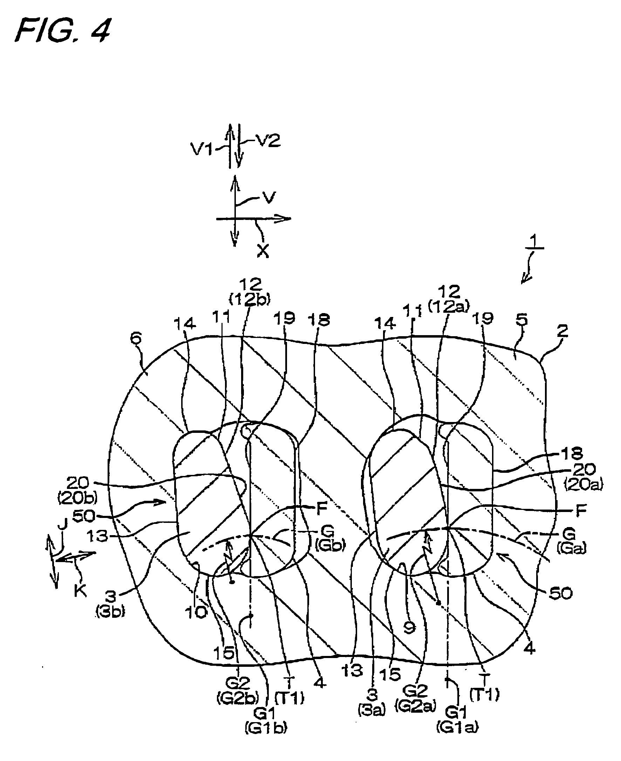

Fig. 3 is a section view of the main portions of the chain 1. Fig. 4 is a section view of the main portions taken along the IV-IV line shown in Fig. 3. Referring to Figs. 3 and 4, the chain 1 includes a plurality of links 2 and a plurality of long connecting members 50 used to connect together these links in such a manner that they can be bent with respect to each other.

In the following description, a direction parallel to the advancing direction of the chain 1 is referred to as a chain advancing direction X; of directions perpendicular to the chain advancing direction X, a direction parallel to the longitudinal direction of the connecting member 50 is referred to as a chain width direction W; and, a direction perpendicular to both the chain advancing direction X and chain width direction W is referred to as an orthogonal direction V.
Each link 2 is a member which is made of a steel sheet formed in a plate shape, while the link 2 includes a front end portion 5 and a rear end portion 6 which are paired with each other and arranged fore and aft in the chain advancing direction X. The front and rear end portions 5 and 6 respectively include a front penetration hole 9 serving as a first penetration hole and a rear penetration hole 10 serving as a second penetration hole. The links 2 are arranged in the chain advancing direction X as well as in the chain width direction W.

In the links 2 adjoining each other in the chain advancing direction X, the front penetration hole 9 of the link 2 existing relatively rearward in the chain advancing direction X and the rear penetration hole 10 of the link 2 existing relatively forward in the chain advancing direction X correspond to each other while they are arranged in the chain width direction W. The links 2 adjoining each other in the chain advancing direction X are connected together in a bendable manner by the connecting members 50 that are respectively inserted into the thus corresponding penetration holes 9 and 10, whereby there is formed the endless shaped chain 1 as a whole.

Each connecting member 50 includes a first pin 3 serving as a power transmission member, and a second pin 4 serving as a kinematic pair. These paired first and second pins 3 and 4 can be brought into rolling and sliding contact with each other as their corresponding links 2 are bent. Here, the term "rolling and sliding contact" means a state of contact that contains at least one of rolling contact and sliding contact.
The first pin 3 is a long member which extends in the chain width direction W; and, the length of the first pin 3 in the chain advancing direction X is, for example, approximately 2.5 mm ∼ 5.0 mm, while the length thereof in the orthogonal direction V is, for example, approximately 5.5 mm ∼ 10.0 mm.

The peripheral surface 11 of the first pin 3 is formed as a smooth surface which extends parallel to the chain width direction W. The peripheral surface 11 includes: a front portion 12 serving as one of two mutually opposed portions which faces forwardly in the chain advancing direction X; a rear portion 13 serving as the other of the opposed portions which faces backwardly in the chain advancing direction X; one end portion 14 serving as one of a pair of end portions which are opposed to each other in the orthogonal direction V; and the other end portion 15 serving as the other of the paired end portions. The front portion 12 is opposed to the second pin 4 of the paired pins and is in rolling and sliding contact with the rear portion 19 (which will be discussed later) of the second pin 4 in a contact portion T (a contact point when viewed from the chain width direction W).

Referring to Figs. 2 and 4, one end portion 14 forms the end portion of the peripheral surface 11 that exists on one side V1 in the orthogonal direction V corresponding to the outward side of the radial directions RP1 and RP2 of the pulleys 60 and 70. The other end portion 15 forms the end portion of the peripheral surface 11 that exists on the other side V2 in the orthogonal direction V corresponding to the inward side of the radial directions RP1 and RP2 of the pulleys 60 and 70.
The first pin 3 includes a pair of end portions 16 in the longitudinal direction thereof; and, the paired end portions 16 are respectively projected outwardly in the chain width direction W with respect to the links 2a and 2b of each link 2 that are respectively disposed in the paired end portions thereof in the chain width direction W. These paired end portions 16 respectively include end faces 17 formed thereon. Each end face 17 has a projectingly curved shape which projects toward its corresponding sheave surfaces 62a and 63a (72a and 73a). The one end portion 14 of the peripheral surface 11 of the first pin 3 is formed wider in the chain width direction than the other end portion 15.

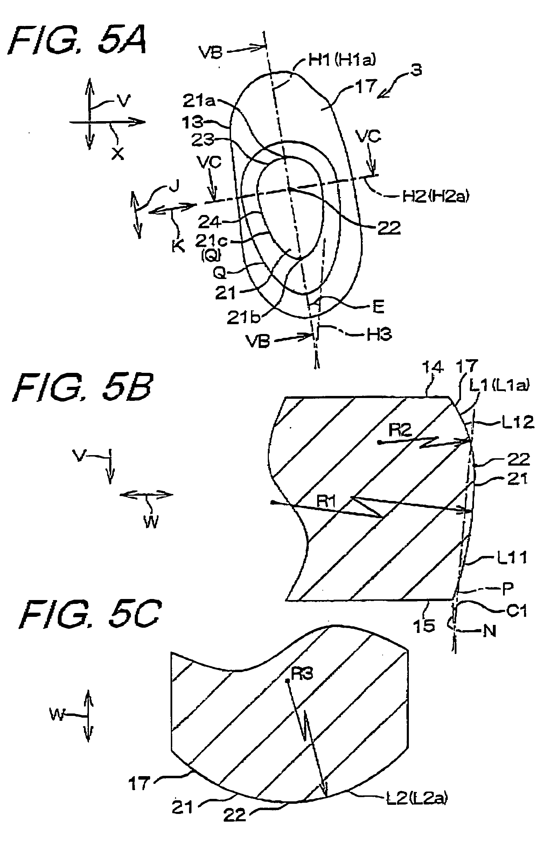

Fig. 5A is a view of the end face 17 of the first pin 3 when it is viewed along the chain width direction W. Fig. 5B is a section view taken along the VB-VB line shown in Fig. 5A. Fig. 5C is a section view taken along the VC-VC line shown in Fig. 5A.
Referring to Figs. 2 and 5A, the paired end faces 17 of the first pin 3 respectively includes contact areas 21 formed thereon. The contact areas 21 can be contacted (frictionally engaged) respectively with the corresponding sheave surfaces 62a, 63a, 72a, 73a of the pulleys 60, 70 through a thin lubrication oil membrane in such a manner that power can be transmitted.

The first pin 3 is held by and between the above-mentioned corresponding sheave surfaces 62a, 63a, 72a, 73a, whereby power can be transmitted between the first pin 3 and the respective pulleys 60, 70. Since the contact area 21 of the end face 17 of the first pin 3 contributes toward direct power transmission, the first pin 3 is made of high-strength wear resisting material, for example, bearing steel (SUJ2).
Referring to Figs. 3 and 4, the second pin (which is also referred to as a strip or an inter-piece) 4 is a long member which is made of similar material to the first pin 3 and extends in the chain width direction W.

In order that the paired end portions of the second pin 4 cannot be contacted with the sheave surfaces of the respective pulleys, the second pin 4 is formed shorter than the first pin 3; and, the second pin 4 is disposed forwardly of its paired first pin 3 in the chain advancing direction X.
The peripheral surface 18 of the second pin 4 is formed as a smooth surface extending parallel to the chain width direction W, and also has a rear portion 19 serving as its opposed portion facing backward in the chain advancing direction X. The intermediate portion of the rear portion 19 in the orthogonal direction V is formed as a flat surface extending perpendicularly to the chain advancing direction X; and, the rear portion 19 is disposed opposed to the front portion 12 of the first pin 3 with which the second pin 4 is paired.

The chain 1 is a so called pressure insertion type of chain. Specifically, into the front penetration holes 9 of the respective links 2, there is loosely fitted their corresponding first pin 3, and also there is fixedly secured their corresponding second pin 4 with pressure; and, into the rear penetration holes 10 of the respective links 10, there is fixedly secured their corresponding first pin 3 with pressure and also there is loosely fitted their corresponding second pin 4.
Owing to the above structure, the front portion 12 of the first pin 3 and the rear portion 19 of the second pin 4, which are paired with each other, can be brought into rolling and sliding contact with each other on a contact portion T which can be moved as their corresponding links 2 are bent relative to each other. Here, the first and second pins 3 and 4, which have been pressure fixed, may also be respectively fitted loosely into their corresponding front penetration holes 9 and rear penetration holes 10.

Also, the chain 1 is a so called involute type chain. Specifically, the front portion 12 of the first pin 3 includes a curved portion 20. The end portion of the curved portion 20, which exists on the other side V2 in the orthogonal direction V, is set as a given start portion F (a given start portion when viewed from the chain width direction W).
The position of the start portion F is coincident with the position of the contact portion T1 of the first pin 3 in the straight line area of the chain 1. This start portion F is disposed on the side of the front portion 12 that is near to the other end portion 15.

When viewed from the chain width direction W, the curved portion 20 is formed as an involute curve having a given start portion F (start point). This involute curve is based on a base circle G The base circle G is a circle which has a center G1 and a radius G2 (base circle radius).
The center G1 exists on a plane which is perpendicular to the chain advancing direction X and contains the contact portion T1 of the first pin 3; and, specifically, it is situated at a position which advances toward the other side V2 in the orthogonal direction V from the above-mentioned contact portion T1. The base circle G and start portion F intersect each other.

Owing to the above structure, when viewed from the chain width direction W, the moving locus of the contact portion T caused by the mutual bending between the corresponding links 2 provides an involute curve with the first pin 3 as the reference thereof
Referring to Figs. 2 and 5A, the contact areas 21 are respectively projected toward their corresponding sheave surfaces 62a, 63a, 72a, 73a of the respective pulleys 60, 70; and, the portions of the contact areas 21 that project most toward their corresponding sheave surfaces 62a, 63a, 72a, 73a provide the top portions 22 of the contact areas 21. The center of the end face when viewed from the chain width direction W is coincident with the top portion 22. As regards the contact pressures of the contact areas 21 with their corresponding sheave surfaces 62a, 63a, 72a, 73a, the top portions 22 provide the highest contact pressure.

Referring to Figs. 5A to 5C, the rear portion 13 of the first pin 3 contains a portion of a first plane H1. The first plane H1 has a given attack angle E relative to an orthogonal plane H3 serving as a plane which is perpendicular to the chain advancing direction X.
The attack angle E is set at an angle of, for example, about 5° ∼ 12°. Here, the attack angle E is set at an angle in the range of not less than 20° (including zero, that is, not less than 0° and not more than 20°). When the attach angle E exceeds 20°, the inclination of the first pin 3 becomes too large, that is, the lay-out of the first pin 3 with respect to its corresponding links cannot be actually realized.

Here, the attack angle E depends on the effective radius of the respective pulleys 60 and 70 relating to the chain 1 and the arrangement pitch of the first pin 3; and, the attack angle E is set such that, in the entire range of the above effective radius that the chain 1 can have, the contact area 21 can be prevented from reaching the edge of the end face 17.
The first plane H1 is perpendicular to a second plane H2. The longitudinal direction J of the first pin 3 when viewed from the chain width direction W (which is also hereinafter referred to as the longitudinal direction J simply) extends along a direction where the first plane H1 extends. The transverse direction K of the first pin when viewed from the chain width direction W (which is also hereinafter referred to as the transverse direction K simply) extends along a direction where the second plane H2 extends.

When viewed from the chain width direction W, the contact area 21 has an egg-like shape which is relatively long in a direction parallel to a first plane H1a passing through the top portion 22 (in the longitudinal direction J) and is relatively short in a direction parallel to a second plane H2a passing through the top portion 22 (in the transverse direction K). This contact area 21 provides an asymmetric shape when the second plane H2a is regarded as the center thereof. In the longitudinal direction J, the distance between one end portion 21a and top portion 22 of the contact area 21 is set shorter than the distance between the other end portion 21b and top portion 22 of the contact area 21.

This contact area 21 includes a semi-circular portion 23 exiting on one side of the second plane H2a in the longitudinal direction J and a semi-elliptic portion 24 existing on the other side of the second plane H2a in the longitudinal direction J. The semi-circular portion 23 and semi-elliptic portion 24 are smoothly connected to each other (in a tangential contact manner).
The contact area 21 intersects with the first plane H1 to form a first intersection line L1, while the contact area 21 intersects with the second plane H2 to form a second intersection line L2.

That is, the first intersection line L1 is an intersection line between an arbitrary plane H1 and contact area 21 (in Fig. 5A, there is illustrated an intersection line L1a containing the top portion 22). The second intersection line L2 is an intersection line between an arbitrary plane H2 and contact area 21 (in Fig. 5C, there is illustrated an intersection line L2a containing the top portion 22).
One of the characteristics of the present embodiment is that the first intersection line L1 serving as at least one of the first and second intersection lines L1 and L2 has a plurality of radiuses of curvature R1, R2.

The first intersection line L1 includes a first portion L11 and a second portion L12 serving as curved portions which are different in the radius of curvature from each other, and also includes an even number of (two) radiuses of curvature R1 and R2. The radius of curvature of the first portion L11 is regarded as a first main radius of curvature serving as the largest radius of curvature in the contact area 21 and, for example, it is set for 150 mm. This first portion L11 is disposed on the other side of the second plane H2a in the longitudinal direction J and also constitutes a portion of the semi-elliptic portion 24.

The radius of curvature R2 of the second portion L12 is regarded as a small radius curvature R2 (for example, 50 mm) when compared with the radius of curvature R1. This second portion L12 is disposed on one side of the second plane H2a in the longitudinal direction J and constitutes a portion of the semi-circular portion 23. The first and second portions L11 and L12 are connected together by a second plane H2a passing through the top portion 22.
The second intersection line L2 is formed as a curved portion and has a single radius of curvature R3. This radius of curvature R3 is regarded as a second main radius of curvature serving as the smallest radius of curvature in the contact area 21 and it is set, for example, 50 mm. The radius of curvature R3 is the same as the radius of curvature R2 of the second portion L12. Here, the radius of curvature R3 may be equal to or smaller than the radius of curvature R2 (R3 ≤ R2), and may also be set for a value smaller than the radius of curvature (R3 < R2).

Owing to the above structure, when viewed from the chain width direction W, the semi-circular portion 23 is formed as a semi-circle having a second main radius of curvature (for example, 50 mm) with the top portion 22 as the radius of curvature thereof. The semi-elliptic portion 24 is formed as a semi-ellipse structured such that their major and minor axes intersect with each other in the top portion 22, the radius of the major axis is used as a first main radius of curvature (for example, 150 mm), and the radius of the minor axis is used as a second main radius of curvature.
An intersection line Q, which is formed between the end faced 17 and an arbitrary inclined surface P inclined at the above-mentioned pulley half angle C1 with respect to a plane N perpendicular to the chain width direction W, is coincident with the outer peripheral edge 21c of the contact area 21 or a shape similar to the outer peripheral edge 21c (in Fig. 5A, there are illustrated two intersection lines Q, that is, an intersection line Q coincident with the outer peripheral edge 21c and an intersection line Q existing outside the former intersection line Q).

Referring to Fig. 4, one of the characteristics of the present embodiment is that, as the plural kinds of first pins 3, there are provided a first type pin 3a serving as a first member and a second type pin 3b serving as a second member, and these first and second type pins 3a and 3b are arranged at random in the chain advancing direction X.
Here, Figs. 5A, 5B and 5C respectively show the first type pins 3a of the first pin 3.

Referring again to Fig. 4, the first type pin 3a and second type pin 3b are different from each other in the following aspects. That is, when viewed along the chain width direction W, the radius of curvature G2a of the base circle Ga of the involute curve of the front portion 12a of the first type pin 3a is set relatively large, while the radius of curvature G2b of the base circle Gb of the involute curve of the front portion 12b of the second type pin 3b is set relatively small.

The vicinity of one side end portion of the first type pin 3a in the longitudinal direction J is formed relatively thick in the transverse direction K (in the chain advancing direction X), while the vicinity of one side end portion of the second type pin 3b in the longitudinal direction J is formed relatively thin in the transverse direction K.
Owing to the above structure, the locus of the rolling and sliding contact of the contact portion T of a first type pin 3a with the first type pin 3a as the reference thereof is different from the locus of the rolling and sliding contact of the contact portion T of a second type pin 3b with the second type pin 3b as the reference thereof.

As described above, the first type and second type pins 3a and 3b are arranged at random in the chain advancing direction X, whereby contact cycles when the respective first pins 3 are sequentially contacted with the respective pulleys are provided at random.
Here, the expression "random arrangement" means that at least one of the first type pins 3a and second type pins 3b are disposed irregularly at least in a portion in the chain advancing direction X. Also, the term "irregularly" means that there is not found at least one of periodicity and regularity.

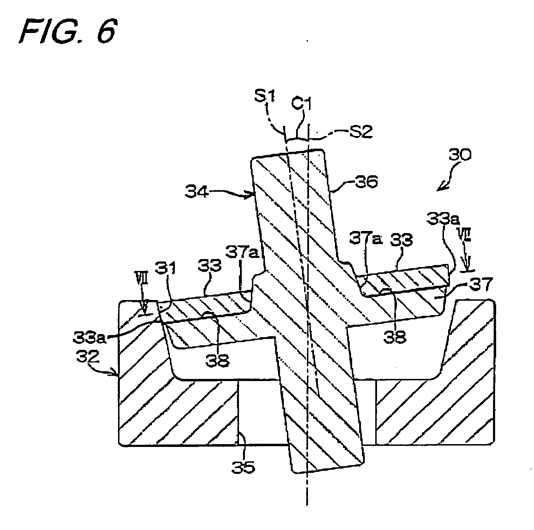

For example, where the first type pin 3a is expressed as [a] and the second type pin 3b is expressed as [b], these pins 3a and 3b are arranged along the chain advancing direction X in the order of [a, b, b, a, b, b, b, a, b, b, b, b, b, a, b, b, b, b, b, b, b] (individual [] is omitted).
The above is the description of the schematic structure of a continuously variable transmission. Next, description will be given below of a method for forming the end face 17 of the above-mentioned first pin 3. Fig. 6 is a typical longitudinal section view of the schematic structure of a grinding apparatus 30. Referring to Fig. 6, the grinding apparatus 30 includes a cup-shaped portion 32 having a ring-shaped grinding surface 31, and a holder 34 for holding the manufacture intermediate member 33 of the first pin 3 in such a manner that it can be slid with respect to the grinding surface 31.

The manufacture intermediate member 33 is a member made of, for example, a long rod-like bearing steel member on which a given heat treatment has been enforced. The cup-shaped portion 32 is structured such that at least a portion thereof including the grinding surface 31 is made of a grind stone and also that the grinding surface 31 is disposed on the inner peripheral surface of the cup-shaped portion 32. The grinding surface 31 is formed in a conical shape and the diameter thereof decreases as it goes from one end of the cup-shaped portion 32 toward the other end portion thereof in the axial direction thereof. In the bottom portion of the cup-shaped portion 32, there is formed an insertion hole 35 through which a portion of the holder 34 can be inserted.

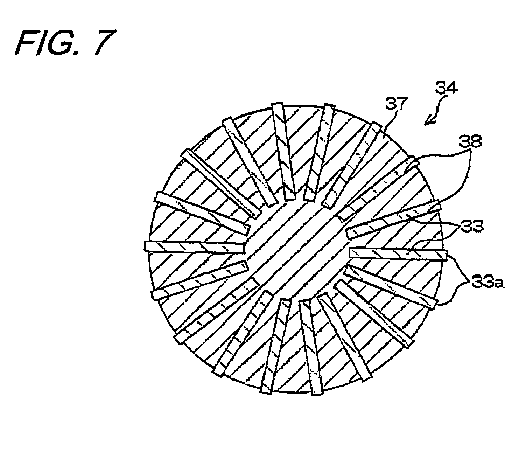

Fig. 7 is a section view of the holder 34, taken along the VII-VII line shown in Fig. 6. Referring to Figs. 6 and 7, the holder 34 includes a shaft portion 36 and a disk portion 37 provided on the shaft portion 36 such that it can be rotated integrally with the shaft portion 3 6.
The axis line S1 of the shaft portion 36 (which is also hereinafter referred to as the axis line S1 of the holder 34 simply) is inclined with respect to a vertical line S2 at a given angle in the range of 0° ∼ 90° (in the present embodiment, for example, at a pulley half angle C1).

The shaft portion 36 can be rotated around the axis line S1 using a drive motor (not shown) or the like. One end of the shaft portion 36 is inserted through the insertion hole 35 of the holder 34. The generating line of the grinding surface 31 is inclined substantially at the pulley half angle C1 with respect to the axis line S1.
In the disk portion 37, there are formed plural (in the present embodiment, for example, 18) hold grooves 38 which can store and hold the manufacture intermediate members 33 therein. The hold grooves 38 are arranged radially at regular intervals in the peripheral direction of the disk portion 37. In the hold grooves 38, there are held the manufacture intermediate members 33 respectively; and, a portion of each manufacture intermediate member 33 including the end face 33a thereof projects outwardly in the radial direction thereof. The longitudinal direction of the manufacture intermediate member 33 is inclined at the pulley half angle C1 with respect to the horizontal direction.

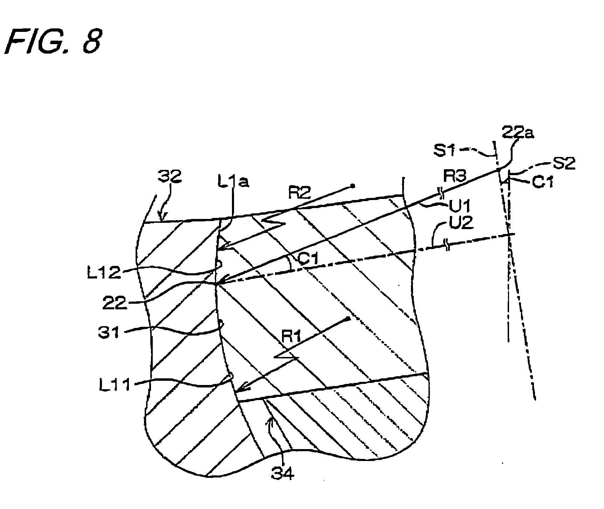

Fig. 8 is an enlarged view of the main portions of Fig. 6. Referring to Fig. 8, the grinding surface 31 of the cup-shaped portion 32 intersects with a plane containing the axis line S1 of the holder 34 to form a first intersection line L1a. That is, there is formed the intersection line L1a having a similar shape to the first intersection line L1a of the first pin 3 (see Fig. 5B).
Referring to Fig. 8, the first portion L11 of the first intersection line L1a of the grinding surface 31 is disposed on the bottom portion side of the cup-shaped portion 32 with respect to the top portion 22. The second portion L12 is disposed on the upper end side of the cup-shaped portion 32 with respect to the top portion 22.

The center of curvature 22a of the top portion 22 is situated on the axis line S 1 of the holder 34. A straight line U1, which connects together the center of curvature 22a and top portion 22, is inclined at the pulley half angle C1 with respect to a straight line U2 which intersects at right angles with the axis line S1 of the holder 34 and passes through the top portion 22. The length of the straight line U2 is R3 cos (C1 x π/180) (mm).
Referring to Fig. 6, the inner end face 37a of the hold groove 38 in the radial direction of the disk portion 37 is inclined at the pulley half angle C1 with respect to the axis line S1 of the holder 34. Owing to this, the positioning of the manufacture intermediate member 33 in the hold groove 38 can be carried out positively and easily. Thus, even when the paired end faces 33a of the manufacture intermediate member 33 are ground separately, the distances between the top portions of the paired end faces 33a, 33a as well as the relative positions between these top portions can be matched to each other with high precision.

When working the end face 33a of the manufacture intermediate member 33, in a state where the holder 34 inclined at the pulley half angle C1 is being rotated around the axis line S1, the end face 33a is slidingly contacted with the grinding surface 31 to thereby grind the end face 33a. The opposite side end face 33a of the manufacture intermediate member 33 is also ground similarly, whereby the manufacture intermediate member 33 can be worked into the first pin 3.
Here, alternatively, while rotating the holder 34 around the axis line S1, the holder 34 and grinding surface 31 may be moved relative to each other in the vertical direction and in the horizontal direction to grind the manufacture intermediate member 33. Or, in a state where the rotation of the holder 34 is stopped, the holder 34 and grinding surface 31 may be moved relative to each other in the vertical direction and in the horizontal direction to grind the manufacture intermediate member 33.

When the manufacture intermediate member 33 is ground into a first pin, this first pin, together with a second pin, is incorporated into a link, thereby forming the chain 1 (see Fig. 1). This chain 1 is wound on a jig (not shown) having a similar shape to the paired pulleys 60 and 70, while this jig gives the chain 1 a tensile load (pre-tensile force) which is two times to three times a rated load. Owing to this, the links 2 of the chain 1 are respectively work hardened and are thereby enhanced in strength.

With use of the present embodiment, it is possible to provide the following operation effect. That is, the first intersection line L1 has the plural radiuses of curvature R1, R2, with the result that, in the contact area 21, there can be formed the semi-elliptic portion 24 having a small degree of curvature and the semi-circular portion 23 having a large degree of curvature.
Owing to this, in the semi-circular portion 23, the contact areas thereof with the respective pulleys 60 and 70 can be reduced, and thus the relative sliding amounts thereof with these pulleys 60 and 70 can be reduced to thereby decrease the slippage loss thereof, which makes it possible to enhance the power transmission efficiency. Also, the semi-elliptic portion 24 can be contacted with the respective pulleys 60 and 70 with a sufficient contact area to thereby be able to reduce the surface pressure thereof with these pulleys 60 and 70. As a result of this, it is possible to prevent an edge contact phenomenon in which the contact of the pulleys 60 and 70 reaches even the edge of the end face 17 of the first pin 3.

Also, the radius of curvature R1 of the first portion L11 of the first intersection line L1 is used as a first main radius of curvature, while the radius of curvature R3 of the second intersection line L2 is used as a second main radius of curvature. Owing to this, when the contact area 21 is viewed from the chain width direction W, the length in the longitudinal direction J can be extended and also the length in the transverse direction K can be shortened. Thus, while the area of the contact area 21 can be secured sufficiently, the thickness of the first pin 3 can be reduced in the chain advancing direction X (in the transverse direction K).

Further, the first intersection line L1 is formed such that it includes a portion having a small radius of curvature (the second portion L12). As a result of this, when the contact area 21 is viewed from the chain width direction W, the whole length of the contact area 21 along the longitudinal direction J can be prevented from being excessively long. This can shorten the contact area 21 in the radial direction of the respective pulleys 60 and 70, thereby being able to more positively prevent the respective pulleys 60 and 70 from touching the edge of the end face 17. Also, since the second intersection line L2 is so structured as to have a single radius of curvature R3, the formation of the contact area 21 can be facilitated.

Also, when viewed from the chain width direction W, the contact area 21 provides an egg-like shape which is relatively long in the longitudinal direction J. Owing to this, the contact area 21 can be formed long and fine in a direction perpendicular to the chain advancing direction X (in the orthogonal direction V) and, as a result of this, the first pin 3 can be formed thin in the chain advancing direction X (in the transverse direction K).
As described above, since the wear and vibration of the end face 17 of the first pin 3 can be reduced, there can be realized the continuously variable transmission 100 which is excellent in durability, silence and power transmission efficiency.

Here, the end face of a conventional pin is structured such that, when the pin is viewed from the chain width direction, the radius of curvature thereof along the longitudinal and transverse directions of the pin is formed to be a single radius of curvature. As the shape of such end face, there can be illustrated, for example, a shape long and fine in the longitudinal direction, a shape long and fine in the transverse direction, and a shape composed of a portion of a spherical surface.
Of these shapes, the shape long and fine in the longitudinal direction provides a contact area which is long in the pulley radial direction. As a result of this, when the pin end face is contacted with the pulley and also when it is disengaged from the pulley, there increases the difference (the difference between linear speeds) between the relative speed of the longitudinal direction one end of the contact area to the pulley and the relative speed of the longitudinal direction other end of the contact area to the pulley, which increases the friction resistance between the pin end face and pulley, resulting in the deteriorated power transmission efficiency.

Also, in the case of the shape having a pin end face which is long and fine in the transverse direction, when trying to reduce the thickness of the pin end face in the transverse direction, there is generated an edge contact phenomenon in which the contact area reaches even the edge of the pin end face. Further, in the shape having a pin end face composed of a portion of a spherical surface, the relative sliding amount of the contact area to the pulley increases to generate a phenomenon in which they pinch each other, resulting in the deteriorated power transmission efficiency.
As described above, the present embodiment can solve the problems such as the deteriorated power transmission efficiency and the occurrence of the edge contact phenomenon, whereby the embodiment is improved when compared with the above-mentioned conventional pins.

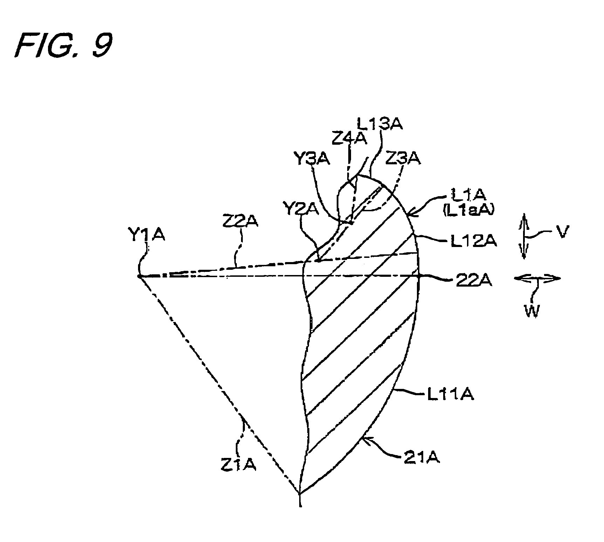

However, the invention is not limited to the above embodiment but there are possible other various changes without departing from the scope and spirit of the appended patent claims.
For example, as shown in Fig. 9, there may also be provided a first intersection line L1A which has three or more kinds of radiuses of curvature. Here, Fig. 9 shows a first intersection line L1aA which passes through a top portion 22A. In this case, the first intersection line L1A includes a first portion L11A, a second portion L12A and a third portion L13A, while the number of radiuses of curvature contained in the first intersection line L1A is odd. The first and second portions L11A and L12A are smoothly connected to each other. And, the second and third portions L12A and L13A are also smoothly connected to each other.

A line Z1A connecting one end of the first portion L11A to the center of curvature Y1A of the first portion L11A, a line Z2A connecting the other end of the first portion L11A to the center of curvature Y1A, and an area surrounded by the first portion L11A cooperate together in forming a fan-like shape. In the first portion L11A, there is provided a top portion 22A, while this top portion 22A and the center of curvature Y1A are arranged in the chain width direction W.
On the line Z2A, there is provided the center of curvature Y2A of the second portion L12A. The radius of curvature of the second portion L12A is smaller than the radius of curvature of the first portion L11A. The line Z2A, a line Z3A connecting one end of the second portion L12A to the center of curvature Y2A, and an area surrounded by the second portion L12A cooperate together in forming a fan-like shape.

On the line Z3A, there is provided the center of curvature Y3A of the third portion L13A. The radius of curvature of the third portion L13A is set, for example, smaller than the radiuses of curvature of the first and second portions L11A and L12A, The line Z3A, a line Z4A connecting one end of the third portion L13A to the center of radius of the third portion L13A, and an area surrounded by the third portion L13A cooperate together in forming a fan-like shape.

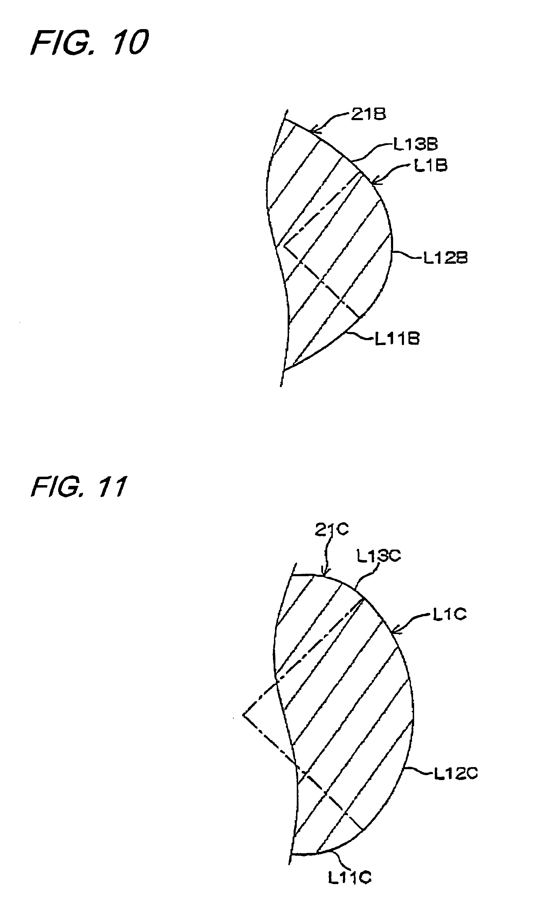

In this case, since the number of radiuses of curvature is greater (three), the shape of the contact area 21A can be optimized further.
Here, instead of the shape shown in Fig. 9, there may also be employed a shape shown in Fig. 10. In this case, the radius of curvature of a second portion L12B is set at the smallest value in the first to third portions L11B to L13B.

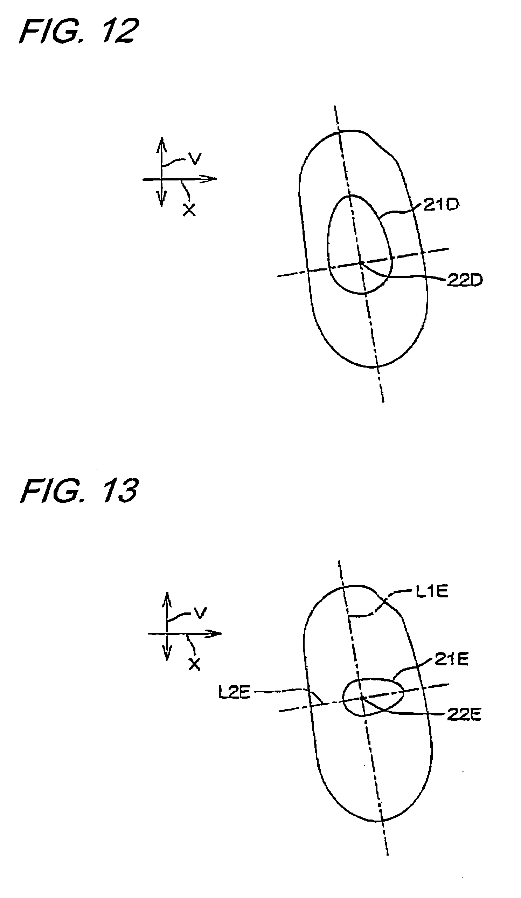

Also, instead of the shape shown in Fig. 9, there may also be employed a shape shown in Fig. 11. In this case, the radius of curvature of the second portion L12C is set at the largest value in the first to third portions L11C to L13C.
Also, the contact area 21 shown in Fig. 5A may be rotated about 180° around the top portion 22 to thereby provide a contact area 21D shown in Fig. 12. Further, the contact area 21 shown in Fig. 5A may be rotated about 90° around the top portion 22 to thereby provide a contact area 21E shown in Fig. 13. In this case, a first intersection line L1E has a single radius of curvature, while a second intersection line L2E has a plurality of radiuses of curvature.

Also, in the above-mentioned respective embodiments, in both the first intersection line L1 and second intersection line L2, there may also be set a plurality of radiuses of curvature.
Further, the paired end faces 33a of the manufacture intermediate member 33 may also be ground simultaneously. Also, the end faces 33a of the manufacture intermediate member 33 may also be ground using a tool such as an end mill.
Also, when viewed from the chain width direction W, the curved portion 20 of the first pin 3 may have other curved line (for example, a curved line having a single radius of curvature or plural radiuses of curvature) than the involute curved line. Further, the invention may also be applied to a so called block type of power transmission chain in which, in the respective vicinities of the paired end portions of a first pin, there are disposed members each including a similar power transmission portion to the end face of the first pin.

Also, the invention is not limited to the embodiment in which the groove widths of both the drive pulleys 60 and 70 can be varied, but it may also be applied to an embodiment in which one of the groove widths can be varied and the other is not varied but is fixed. Further, although description has been given heretofore of the embodiment in which the groove width can be varied continuously (in a step-less manner), the invention may also be applied to other power transmission such as a transmission in which the groove width can be varied step by step or a transmission in which the groove width is fixed (no transmission).

### Industrial Applicability

According to the invention, there can be provided a power transmission chain and a power transmission apparatus which not only can prevent an edge contact phenomenon in which the edge of the pin end face is contacted with the pulleys but also can enhance the power transmission efficiency.

## Claims

1. A power transmission chain, comprising:
a plurality of links arranged in the advancing direction of the chain; and,
a plurality of long connecting members for connecting together the links so as to be bent with respect to each other,
wherein each of the connecting members includes a power transmission member having an end face capable of forming therein a contact area contactable with the sheave surface of a pulley in a power transmittable manner,
the contact area intersects with a first plane inclined at an angle of not less than 0° and not more than 20° with respect to a plane perpendicular to the chain advancing direction to thereby form a first intersection line containing a curved portion, the contact area intersects with a second plane perpendicular to the first plane to thereby form a second intersection line containing a curved portion, and
at least one of the first and second intersection lines has a plurality of radiuses of curvature.

2. A power transmission chain as set forth in Claim 1, wherein the radius of curvature of the first intersection line includes a relatively large main radius of curvature with respect to the contact area, and the radius of curvature of the second intersection line includes a relatively small main radius of curvature with respect to the contact area.

3. A power transmission chain as set forth in Claim 1, wherein the first intersection line has a plurality of radiuses of curvature, and the second intersection line has a single radius of curvature.

4. A power transmission chain as set forth in Claim 1, wherein the contact area, when viewed from the longitudinal direction of the connecting member, has an egg-like shape relatively long in a direction parallel to the first plane.

5. A power transmission apparatus, comprising: first and second pulleys each including a pair of mutually opposed conical-shaped sheave surfaces; and, a power transmission chain as set forth in Claim 1 wound on and between the first and second pulleys and engageable with the sheave surfaces to thereby transmit power.
